# EUROPEAN PATENT SPECIFICATION

(11) **EP 1 964 738 B1**
(45) Date of publication and mention of the grant of the patent: **03.04.2013**
(21) Application number: 08003549.6
(22) Date of filing: 27.02.2008
(51) Int. Cl.: B60T 8/32, B60T 8/26, B62L 3/08

(54) **Brake hydraulic pressure control apparatus for bar-handle vehicle**
Vorrichtung zur Steuerung des hydraulischen Bremsdruckes für ein Fahrzeug mit Lenker
Appareil de contrôle de pression hydraulique de freinage pour véhicule avec guidon

(30) Priority: 27.02.2007 JP 2007046413
(43) Date of publication of application: 03.09.2008
(73) Proprietor: NISSIN KOGYO CO., LTD., Ueda-shi Nagano (JP)
(72) Inventor: Hamanaka, Takayuki c/o NISSIN KOGYO CO., LTD., Nagano (JP)
(74) Representative: HOFFMANN EITLE

(56) References cited:
- EP-A2- 1 040 975
- EP-A2- 1 277 635
- JP-A- 61 150 858
- JP-A- 2000 006 779
- JP-B- 3 457 190

## Description

### Field of the invention

The present invention relates to a brake hydraulic pressure control apparatus for a bar-handle vehicle.

### Related art

As a hydraulic circuit for a brake hydraulic pressure control apparatus to be used mainly in a bar-handle type vehicle such as a motor bicycle, a motor tricycle or an all-terrain vehicle (ATV), there is known a constitution (as referred to Patent Document 1 and Patent Document 2, for example), which can perform an anti-lock brake control on each wheel brake and also a brake control (as will be called the "interlocking brake control") for interlocking the wheel brakes of front and rear wheels.

This hydraulic circuit is constituted to include a brake line for braking one (e.g., the wheel brake of the rear wheel) of two front and rear wheel brakes, and a brake line for braking the other wheel brake (e.g., the wheel brake of the front wheel). Each brake line is equipped with an electromagnetic valve, a pump, a motor and so on, which are necessary for the anti-lock brake control or the interlocking brake control.
[Patent Document 1] Japanese Patent Unexamined Publication JP-A-2000-6779 (Fig. 8)
[Patent Document 2] Japanese Patent Examined Publication JP-B-3,457,190 (Fig. 1)

In the brake hydraulic pressure control apparatuses for the bar-handle vehicle of Patent Document 1 and Patent Document 2, the brake hydraulic pressure is applied to both the wheel brakes by the interlocking brake control, even when the driver operates only one of the brake operation elements. Pulsations resulting from the motions of the pump are transmitted to the other brake operation element. Therefore, the operation feeling of the other brake operation element may be deteriorated, when the other brake operation element is operated after one brake operation element was operated.

EP 1 277 635 A2 and EP 1 040 975 A2 relate to an apparatus for a motorcycle and a brake control method. EP1277635 A2 discloses all the features of the preamble of claim 1.

### SUMMARY OF THE INVENTION

From these points of view, the present invention has an object to provide a brake hydraulic pressure control apparatus for a bar-handle vehicle, in which the operation feeling of a brake operation element corresponding to a brake line under an interlocking brake control is hardly deteriorated even when the brake operation element is operated while the interlocking brake control is being executed.
The present invention relates to a brake hydraulic pressure apparatus for a bar-handle vehicle as defined in independent claim 1. Advantageous further embodiments are recited in the dependent claims.

In order to solve this problem, according to the invention, there is provided a brake hydraulic pressure control apparatus for a bar-handle vehicle, including:
two brake lines including hydraulic pressure passages leading from master cylinders to wheel brakes for generating brake hydraulic pressures according to stroke extents of brake operation elements;
a determination unit which determines whether or not it is necessary to apply the brake hydraulic pressure to the wheel brake corresponding to the other of the brake lines in response to an operation of the brake operation element corresponding to one of the brake lines;
a pump provided on at least the other of the brake lines;
a motor which drives the pump; and
an interlocking brake control unit which executes an interlocking brake control including a control to activate the motor, when the determination unit determines that it is necessary to apply the brake hydraulic pressure to the other of the wheel brakes,
wherein the brake fluid discharged from the pump is supplied to the other of the brakes pressure to apply the brake hydraulic pressure on the other of the wheel brakes,
the interlocking brake control unit is adapted to activate the motor at a second duty ratio
the brake hydraulic pressure control apparatus is characterized in that:
the interlocking brake control unit activates the motor at a first duty ratio when the
interlocking brake control is started;
the determination unit also determines whether or not influences of pressure loss occurred at an initial stage of the interlocking brake control have been restored; and wherein :
when the determination unit determines that the influences of the pressure loss have been restored, the second duty ratio smaller than the first duty ratio is activated

In the invention, the determination unit is provided with a function to determine whether or not the operation of the brake operation element corresponding to one of the brake lines is an emergency operation, and the interlocking brake control unit may be constituted to activate the motor at the first duty ratio even after the influences of the pressure loss are restored by the determination unit, when the determination unit determines that the operation is an emergency operation. Thus, the brake hydraulic pressure to be applied to the other wheel brake can be quickly raised when the driver performs an emergency operation on one brake operation element.

According to this brake hydraulic pressure control apparatus for the bar-handle vehicle, when it is determined that the influences such as the time lag from the output of a signal to activate the motor till the motor (pump) actually moves, or the pressure loss due to the constitutions of a master cylinder, wheel brakes or hydraulic pressure passages are restored, the subsequent duty ratio (the second duty ratio) of the motor is made smaller than the existing duty ratio (the first duty ratio). When it is determined that the influences of the pressure loss are solved, the motions of the pump are delayed so that the pulsations due to the motions of the pump can be reduced.
In short, according to the invention, it is possible to reduce the pulsations of the pump, which are transmitted to the brake operation element of the other brake line which is the target of the interlocking brake control. Even when the other brake operation element is operated while the interlocking brake control is being executed, the operation feeling of that brake operation element is hardly deteriorated. Midway of the interlocking brake control, moreover, the duty ratio of the motor is reduced so that the working noises during the interlocking brake control can be reduced.

Before it is determined the influences of the pressure loss are restored after the interlocking brake control was started, the motor is activated at the first duty ratio higher than the second duty ratio. As a result, the brake hydraulic pressure to be applied to the wheel brake can be promptly raised by the interlocking brake control.

In a preferred embodiment of the invention, the interlocking brake control unit may be provided with a function to set the magnitude of the second duty ratio in accordance with the operation state of the brake operation element corresponding to one of the brake lines. Thus, the level or the rising rate of the brake hydraulic pressure to be applied to the other wheel brake can be adjusted according to the operation state of one brake operation element. As a result, the pulsations of the pump and the working noises of the motor can be reduced while retaining the rising rate of the brake hydraulic pressure according to the operation situations of the brake operation element.

In another preferred embodiment of the invention, the determination unit may be provided with a function to determine whether or not the physical quantity correlating to the brake hydraulic pressure of the wheel brake corresponding to the other of the brake lines which is the target of the interlocking brake control has reached a target value, and the interlocking brake control unit may be constituted to activate the motor at a third duty ratio smaller than the second duty ratio, when the determination unit determines that the physical quantity has reached a target value. Thus, the pulsations of the pump and the working noises of the motor after the physical quantity reached the target value can be made lower than those before the same reaches the target value.

The physical quantities correlating to the brake hydraulic pressure of the wheel brake contain not only the output value of the pressure sensor disposed in the passages or the like communicating with the wheel brake but also the estimated values, as estimated by various sensors, of the brake hydraulic pressure, and the drive time (the working time at each duty ratio of the motor) of the pump.

In a further embodiment of the invention, the determination unit may be provided with a function to determine that the pump halt condition has established, when the physical quantity correlating to the brake hydraulic pressure of the master cylinder corresponding to the other of the brake lines which is the target of the interlocking brake control becomes a halt reference value or higher, and the interlocking brake control unit may be provided with a function to execute a control to halt the motor having been activated by the interlocking brake control, when the determination unit determines that the pump halt condition has established.

Thus, even when the other brake operation element is operated while the interlocking brake control is being executed, the pulsations due to the motions of the pump do not occur, after the physical quantity correlating to the brake hydraulic pressure of the master cylinder corresponding to the other brake line reached the halt reference value. As a result, the operation feeling of the other brake operation element is not deteriorated. After the halt reference value was reached, the working noises of the motor are completely eliminated.

Here, the physical quantities correlating to the brake hydraulic pressure of the master cylinder include the output values of the pressure sensors disposed in the passages or the like communicating with the master cylinder and also the estimated values, as estimated by various sensor, of the brake hydraulic pressure, the output valves of the stroke sensor attached to the brake operation element and so on.

According to the invention, after one brake operation element was operated to execute the interlocking brake control, the operation feeling of the other brake operation element is hardly deteriorated even when the other brake operation element is operated.

### BRIEF DESCRIPTION OF THE DRAWINGS

Fig. 1 is a hydraulic circuit diagram of a brake hydraulic pressure control apparatus for a bar-handle vehicle according to a first embodiment of the invention;
Fig. 2 is a block diagram for explaining the functions of the brake hydraulic pressure control apparatus for the bar-handle vehicle according to the first embodiment of the invention;
Fig. 3 is a diagram showing the state of a hydraulic circuit in an interlocking brake control;
Fig. 4 is a flow chart for explaining a control flow of the brake hydraulic pressure control apparatus for the bar-handle vehicle according to the first embodiment of the invention;
Fig. 5A is a graph showing the time changes of a brake hydraulic pressure of the case, in which an emergency operation is not done;
Fig. 5B is a graph showing the time changes of a duty ratio of a motor of the case, in which the emergency operation is not done;
Fig. 6A is a graph showing the time changes of the brake hydraulic pressure of the case, in which the emergency operation is done;
Fig. 6B is a graph showing the time changes of the duty ratio of the motor of the case, in which the emergency operation is done;
Fig. 7 is a block diagram for explaining the functions of a brake hydraulic pressure control apparatus for a bar-handle vehicle according to a second embodiment of the invention;
Fig. 8 is a flow chart for explaining a control flow of the brake hydraulic pressure control apparatus for the bar-handle vehicle according to the second embodiment of the invention;
Fig. 9 is a flow chart showing a control flow of an intervention determination;
Fig. 10A is a graph showing the time changes of a wheel pressure;
Fig. 10B is a graph showing the time changes of a master pressure;
Fig. 10C is a graph showing the working situations of a motor;
Fig. 10D is a graph showing the opening/closing states of an inlet valve; and
Fug. 10E is a graph showing the opening/closing states of a cut valve.

### DETAILED DESCRIPTION OF THE PREFERED EMBODIMENTS

### (First Embodiment)

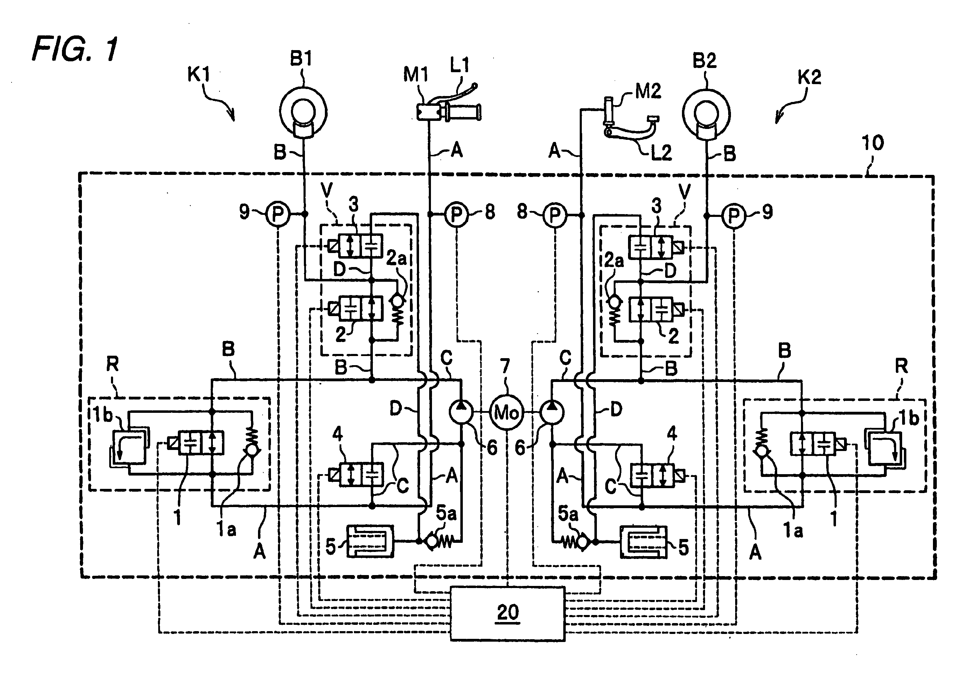

A brake hydraulic pressure control apparatus for a bar-handle vehicle according to a first embodiment is suitably used in a bar-handle type vehicle such as a motor bicycle, a motor tricycle or an all-terrain vehicle (ATV). As shown in Fig. 1, the brake hydraulic pressure control apparatus is provided with: a hydraulic unit 10 having various parts such as electromagnetic valves, pumps and motors, and passages for a brake fluid; and a control unit 20 for controlling the various parts of that hydraulic unit 10. The brake hydraulic pressure control apparatus can execute the independent anti-lock brake controls of wheel brakes B1 and B2, and interlocking brake controls for interlocking the two wheel brakes B1 and B2.

The bar-handle vehicle brake hydraulic pressure control apparatus is constituted to include a brake line K1 for braking a front wheel, and a brake line K2 for braking a rear wheel. The brake line K1 is equipped with hydraulic pressure passages A and B, which lead from a master cylinder M1 for generating a brake hydraulic pressure according to the stroke extent of a brake operation element L1 to the wheel cylinder of the wheel brake B1 of the front wheel. Likewise, the brake line K2 is equipped with hydraulic pressure passages A and B, which lead from a master cylinder M2 for generating a brake hydraulic pressure according to the stroke extent of a brake operation element L2 to the wheel cylinder of the wheel brake B2 of the rear wheel.

Here, this embodiment exemplifies the case, in which the brake operation element L1 corresponding to the brake line K1 is a brake lever whereas the brake operation element L2 corresponding to the brake line K2 is a brake pedal. However, this exemplification is not intended to limit the mode of the brake operation elements.

The master cylinders M1 and M2 have the not-shown cylinders, to which tank chambers reserving the brake fluid are connected. In these cylinders, there are combined the not-shown rod pistons, which are slid in the axial direction of the cylinders by the operations of the brake operation elements L1 and L2 thereby to feed out the brake fluid.

Thus, the bar-handle vehicle brake hydraulic pressure control apparatus is constituted to include the two brake lines K1 and K2. However, these brake lines K1 and K2 have the identical constitutions. In the following, the brake line K1 of the front wheel is mainly described, and the brake line K2 of the rear wheel is suitably described.

The brake line K1 of the front wheel is equipped with a regulator R, control valve unit V, a suction valve 4, a reservoir 5, a pump 6, a first pressure sensor 8 and a second pressure sensor 9.

In the following, the hydraulic pressure passage from the master cylinder M1 to the regulator R is called the "output hydraulic pressure passage A", and the passage from the regulator R to the wheel brake B1 is called the "wheel hydraulic pressure passage B". Moreover, the passage bypassing the regulator R, that is, the passage for providing the communication between the output hydraulic pressure passage A and the wheel hydraulic pressure passage B is called the "suction passage C", and the passage leading from the wheel hydraulic pressure passage B to the reservoir 5 is called the "open passage D". Moreover, the "upstream side" means the side of the master cylinder M1 (M2), and the "downstream side" means the side of the wheel brake B1 (B2).

The regulator R has functions of:
switching an inflow state where the brake fluid flows from the output hydraulic pressure passage A to the wheel hydraulic pressure passage B and a block state where such the inflow of the brake fluid is cut off;
adjusting the brake hydraulic pressure on the downstream side of the regulator R to a predetermined value or lower when the inflow of the brake fluid from the output hydraulic pressure passage A to the wheel hydraulic pressure passage B is blocked; and
allowing the inflow of the brake fluid from the upstream side to the downstream side (that is, from the output hydraulic pressure passage A to the wheel hydraulic pressure passage B) when the brake hydraulic pressure on the upstream side becomes higher than the brake hydraulic pressure on the downstream side. The regulator is configured to have a cut valve 1, a check valve 1a and a relief valve 1b.

The cut valve 1 opens/closes the hydraulic pressure passage (i.e., the output hydraulic pressure passage A and the wheel hydraulic pressure passage B) for providing the communication between the master cylinder M1 and the wheel brake B1. The cut valve 1 is made of a normally open electromagnetic valve interposed between the output hydraulic pressure passage A and the wheel hydraulic pressure passage B so that it allows the flow the brake fluid, when in an open state, but blocks when in a closed state.
The normally open electromagnetic valve constituting the cut valve 1 is electrically connected, at an electromagnetic coil for driving its valve member, with the control unit 20. The normally open electromagnetic valve is closed, when the electromagnetic coil is energized on the basis of the command from the control unit 20, and it opened when the electromagnetic coil is deenergized. Here, the cut valve 1 according to this embodiment is made of a linear type electromagnetic valve capable of controlling an ON/OFF valve.

The check valve 1a is a one-way valve for allowing only the inflow of the brake fluid from its upstream side to its downstream side, and is disposed in parallel with the cut valve 1.

The relief valve 1b is opened when the value calculated by subtracting the brake hydraulic pressure of the output hydraulic pressure passage A from the brake hydraulic pressure of the wheel hydraulic pressure passage B becomes the valve opening pressure or higher. This function of the relief valve 1b is added to the normally closed electromagnetic valve as a function in this embodiment. Here, the valve opening pressure of the relief valve 1b (the valve opening pressure of the cut valve 1) can be raised or lowered by controlling the magnitude of the current value to be fed to the electromagnetic coil for driving the electromagnetic valve.

The control valve unit V has a function to switch:
a state where the open passage D is blocked while the wheel hydraulic pressure passage B is being opened;
a state where the open passage D is opened while the wheel hydraulic pressure passage B is being blocked; and
a state where the wheel hydraulic pressure passage B and the open passage D are blocked.
The control valve unit V is constituted to have an inlet valve 2, a check valve 2a and an outlet valve 3.

The inlet valve 2 is made of a normally open electromagnetic valve disposed in the wheel hydraulic pressure passage B, and allows the passage of the brake fluid, when opened, but blocks when closed. The normally open electromagnetic valve constituting the inlet valve 2 is electrically connected, at an electromagnetic coil for driving its valve member, with the control unit 20. This normally open electromagnetic valve is closed, when the electromagnetic coil is energized on the basis of a command from the control unit 20, and opened when the electromagnetic coil is deenergized.

The check valve 2a is a valve for allowing only the inflow of the brake fluid from its downstream side to its upstream side, and is disposed in parallel with each inlet valve 2.

The outlet valve 3 is made of a normally closed electromagnetic valve disposed in the open passage D. The inflow of the brake fluid from the side of the wheel brake B1 is blocked when the outlet valve 3 is closed and the inflow is allowed when the outlet valve is opened. The normally closed electromagnetic valve constituting the outlet valve 3 is electrically connected, at an electromagnetic coil for driving its valve member, with the control unit 20. The normally closed electromagnetic valve is opened, when the electromagnetic coil is energized on the basis of a command from the control unit 20, and closed when the electromagnetic coil is deenergized.

The suction valve 4 opens/closes the suction passage C on the suction side of the pump 6, and is made of a normally closed electromagnetic valve in this embodiment. Specifically, the suction valve 4 switches the state where the suction passage C is opened, and the state where the same is closed. When the suction valve 4 is opened, it establishes the state where the master cylinder M1 and the suction port of the pump 6 communicate with each other. The normally closed electromagnetic valve constituting the suction valve 4 is electrically connected, at an electromagnetic coil for driving its valve member, with the control unit 20. This normally closed electromagnetic valve is opened, when the electromagnetic coil is energized on the basis of a command from the control unit 20, and closed when the electromagnetic coil is deenergized.

A reservoir 5 is provided at an end of the open passage D, and functions to temporally store the brake fluid which is released by opening the respective the outlet valves 3. Further, a check valve 5a, which only allows inflow of the brake fluid from the reservoir side to the pump 6 side, is disposed on a fluid passage which communicates the reservoir 5 with the suction valve of the pump 6.

The pump 6 is a reciprocating pump provided in the suction passage C. The pump 6 is driven by rotation force of the motor 7. The pump 7 sucks the brake fluid on an upstream side (master cylinder M1 side) and discharges it to a downstream side (wheel brake B1 side). The pump 6 is driven at the time of antilock brake control, and discharges the brake fluid which are temporally stored in the reservoir 5 to the wheel hydraulic pressure passage B side to thereby recover pressure state of the decompressed output hydraulic pressure passage A and/or wheel hydraulic pressure passage B.
Further, the pump 6 is also driven at the time of interlocking brake, and as described later, sucks the brake fluid on the upstream side and discharge it to the downstream side to thereby apply brake hydraulic pressure on the wheel brake B1.
Note that since the pump 6 includes a one-way valve which allows only inflow of brake fluid from the suction side to the discharge side, even if the brake hydraulic pressure on the discharge side becomes higher than that on the suction side, there is no fear that the brake fluid back flows. Further, at the discharge side of the pump 6, now-shown damper and/or orifice is provided and they cooperate together to reduce the pulsation of the brake fluid discharged from the pump 6.

Here, the motor 7 is a power source, which is common to the pump 6 in the brake line K1 of the front wheel and the pump 6 in the brake line K2 of the rear wheel, and which acts at the duty ratio (i.e., the ratio of the ON time when the motor 7 is activated with a pulsating current repeating ON/OFF for a constant period) set by the control unit 20.

The first pressure sensor 8 measures the magnitude of the brake hydraulic pressure in the output hydraulic pressure passage A. The brake hydraulic pressure measured by the first pressure sensor 8 is a physical quantity relating to the brake hydraulic pressure in the master cylinder M1, and it can be substantially deemed as the brake hydraulic pressure in the master cylinder M1. Here, in the following description, the brake hydraulic pressure measured by the first pressure sensor 8 will be called the "master pressure". This master pressure is continuously introduced into the control unit 20, and is used for the interlocking brake control.

The second pressure sensor 9 measures the magnitude of the brake hydraulic pressure in the wheel hydraulic pressure passage B. The brake hydraulic pressure measured by the second pressure sensor 9 is a physical quantity relating to the wheel hydraulic pressure in the wheel brake B1 (in the wheel cylinder, more specifically), and it can be substantially deemed as the brake hydraulic pressure in the wheel brake B 1. Here, in the following description, the brake hydraulic pressure measured by the second pressure sensor 9 will be called the "wheel pressure". This wheel pressure is continuously introduced into the control unit 20, and is used for the interlocking brake control.

On the basis of the various physical quantities such as the wheel velocities outputted from the not-shown wheel velocity sensors, the master pressure and the wheel pressures, the control unit 20 controls the opening/closing operations of the cut valve 1, the inlet valve 2, the outlet valve 3 and the suction valve 4, and the motor 7 (the pump 6 indirectly). The control unit 20 is equipped with a CPU (Central Processing Unit), a RAM, a ROM and an input/output circuit, and performs the operations to execute the anti-lock brake control and the interlocking brake control on the basis of the aforementioned physical quantities, the control programs stored in the ROM, various threshold values (reference values) and so on.

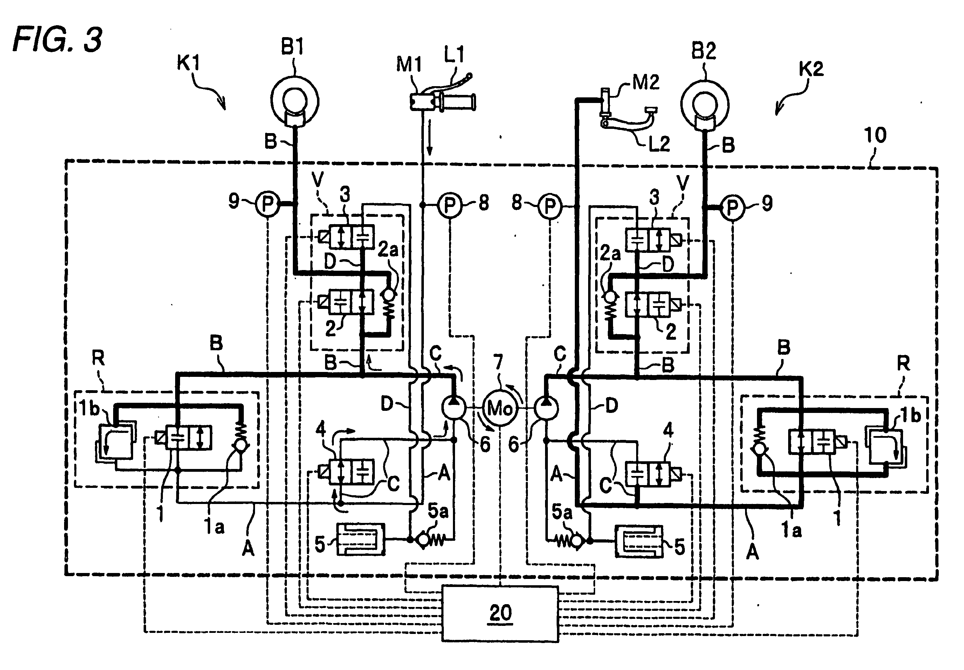

Here in the state (a normal set state), in which neither the anti-lock brake control nor the interlocking brake control is executed, the electromagnetic coil for driving the aforementioned electromagnetic valve is demagnetized to open the cut valve 1 and the inlet valve 2 and to close the outlet valve 3 and the suction valve 4. If the driver operates the brake operation elements L1 and L2 when the control unit 20 selects the normal set state, the brake hydraulic pressures, as generated in the master cylinders M1 and M2, are directly applied to the wheel brakes B1 and B2 (as referred to the brake line K2 of Fig. 3) via the output hydraulic pressure passage A and the wheel hydraulic pressure passage B.

The anti-lock brake control is executed when the wheels are to come into the locked states, and is realized by controlling the control valve unit V corresponding to the wheel brakes B 1 and B2 of the wheels, as might otherwise come into the locked states, thereby to select suitably states where the brake hydraulic pressures on the wheel brakes B1 and B2 are decreased, increased or held constant. Which of the states among the increase, decrease and holding of the pressure is to be selected is determined by the control unit 20 on the basis of the wheel velocities obtained from the not-shown wheel velocity sensors. During the anti-lock brake control, the cut valve 1 is opened whereas the suction valve 4 is closed.

The anti-lock brake control is summarized in the following. The brake lines K1 and K2 are identical in their constitutions, as described hereinbefore. Here is exemplified the case, in which the anti-lock brake control is executed for the brake line K1.

When the brake hydraulic pressure acting on the wheel brake B1 is to be lowered by the anti-lock brake control, the inlet valve 2 in the brake line K1 is closed whereas the outlet valve 3 is opened. Thus, the brake fluid in the wheel hydraulic pressure passage B flows via the open passage D into the reservoir 5 so that the brake hydraulic pressure acting on the wheel brake B1 falls. When the anti-lock brake control is to be executed, the pump 6 (directly the motor 7) is driven to return the brake fluid reserved in the reservoir 5 to the wheel hydraulic pressure passage B.

When the brake hydraulic pressure acting on the wheel brake B1 is to be held by the anti-lock brake control, the inlet valve 2 in the brake line K1 is closed, and the outlet valve 3 is also closed. Thus, the brake fluid is confined in the passage which is closed by the wheel brake B1, the inlet valve 2 and the exit valve 4. As a result, the brake hydraulic pressure acting on the wheel brake B1 is held constant.

When the brake hydraulic pressure acting on the wheel brake B1 is to be raised by the anti-lock brake control, the inlet valve 2 is opened whereas the outlet valve 3 is closed. Thus, the brake hydraulic pressure, as generated in the master cylinder M1, is applied to the wheel brake B1 via the output hydraulic pressure passage A and the wheel hydraulic pressure passage B so that the brake hydraulic pressure to act on the wheel brake B1 rises.

The interlocking brake control is described in detail in the following.
This interlocking brake control includes
a control (as may be called the "rear interlocking brake control" in the following), in which the brake hydraulic pressure is applied to the wheel brake B1 corresponding to the brake line K1 of the front wheel while being interlocked with the operation of the brake operation element L2 corresponding to the brake line K2 of the rear wheel; and
a control (as may be called the "front interlocking brake control" in the following), in which the brake hydraulic pressure is applied to the wheel brake B2 corresponding to the brake line K2 of the rear wheel while being interlocked with the operation of the brake operation element L1 corresponding to the brake line K1 of the front wheel.
In the following description, the "rear interlocking brake control" and the "front interlocking brake control" will be called together as the "interlocking brake control", until they are not discriminated. Moreover, the rear interlocking brake control and the front interlocking brake control are identical in their basic actions, although they are different in the brake line to be controlled. Therefore, the following description is made mainly by presenting a specific example on the rear interlocking brake control, and a specific example is suitably omitted on the front interlocking brake control.

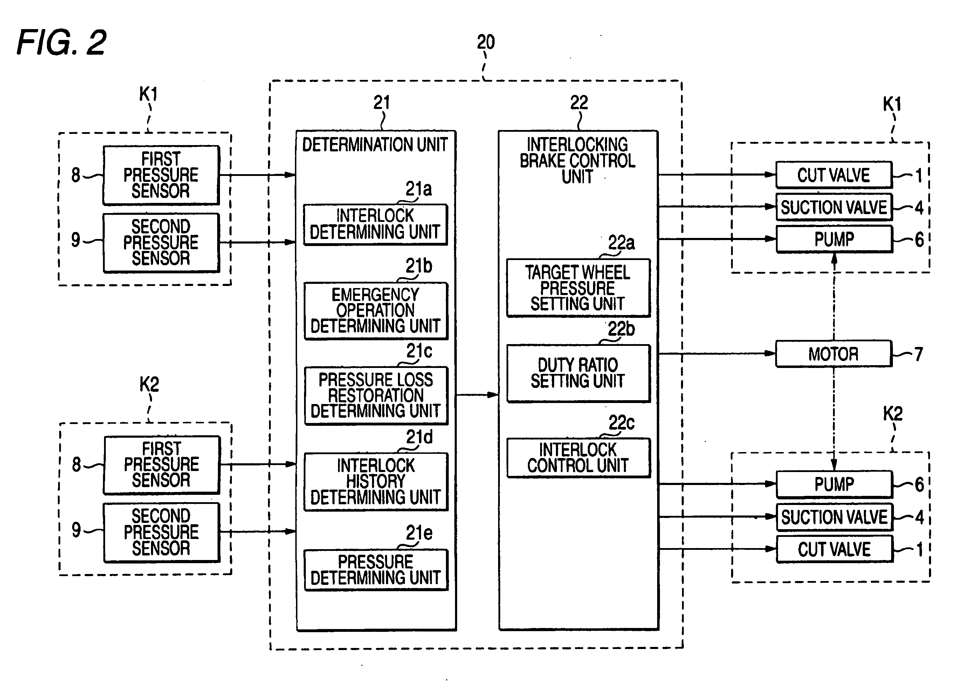

The interlocking brake control is executed, as shown in Fig. 2, by inputting the physical quantities such as the master pressure acquired by the first pressure sensor 8 or the wheel pressure acquired by the second pressure sensor 9, into the control unit 20 for functioning determination unit 21 and interlocking brake control unit 22.

The determination unit 21 is constituted to include an interlock determining unit 21a, an emergency operation determining unit 21b, a pressure loss restoration determining unit 21 c, an interlock history determining unit 21 d and a pressure determining unit 21 e.

The interlock determining unit 21 a has functions of:
determining whether or not it is necessary to apply the brake hydraulic pressure to the wheel brake B1 corresponding to the brake line K1 of one wheel (the front wheel) while being interlocked with the operation of the brake operation element L2 corresponding to the brake line K2 of the other wheel (the rear wheel) (that is, whether or not it is necessary to execute the interlocking brake control); and
outputting the determination result to the interlocking brake control unit 22.
In this embodiment, it is determined that the rear interlocking brake control has to be executed when the following conditions (as will be called the "rear interlocking conditions") are established:
(a) the master pressure in the brake line K1 of the front wheel is lower than the later-described halt reference value;
(b) the master pressure in the brake line K2 of the rear wheel is higher than zero; and
(c) the history that the master pressure in the brake line K1 of the front wheel becomes a halt reference value or higher does not exist.
In this embodiment, there is exemplified the case where it is determined whether or not the interlocking brake control has to be executed "on the basis of the master pressure acquired (measured) by the first pressure sensors 8 of the brake lines K1 and K2", but this exemplification is not intended to limit the determining method. For example, when there is a stroke sensor for detecting the magnitudes of the stroke extents of the brake operation elements L1 and L2 or one of the physical quantities relating to the brake hydraulic pressures of the master cylinders M1 and M2, whether or not it is necessary to execute the interlocking brake control may be determined on the basis of the magnitude of the stroke extent acquired by that stroke sensor.

The interlock determining unit 21a further has functions of:
determining whether or not it is necessary to end the interlocking brake control; and
outputting the determination result to the interlocking brake control unit 22.
In this embodiment, when there establishes the condition (as will be called the "ending condition") that the master pressure in the brake line K2 of the rear wheel has become zero (the operation on the brake operation element L2 of the brake line K2 of the rear wheel has ended), it is determined that it is necessary to end the rear interlocking brake control. In short, the interlock determining unit 21a in this embodiment determines whether or not it is necessary to end the rear interlocking brake control on the basis of the master pressure or the like in the brake line K2 of the rear wheel.

The emergency operation determining unit 21 b has functions of:
determining whether or not the operation of the brake operation element (the brake operation element having earlier started the operation) corresponding to the brake line K2 of one wheel (the rear wheel) is emergency, and
outputting the determination result to the interlocking brake control unit 22.
The emergency operation determining unit 21b according to the embodiment determines whether or not the operation of the brake operation element L2 is emergency, on the basis of the master pressure of the brake line K2 at an initial operation stage (till lapse of a predetermined time period from the operation start) of the brake operation element L2 of the rear wheel.
When it determines that the operation of the brake operation element L2 is emergency, the emergency operation determining unit 21b sets the emergency operation flag indicating the presence/absence of the emergency operation to "1", and stores it in the not-shown storage unit. On the other hand, when it is determined that the operation of the brake operation element L2 is not emergency and that the emergency operation ended, the emergency operation determining unit 21 b sets the emergency operation flag to "0".

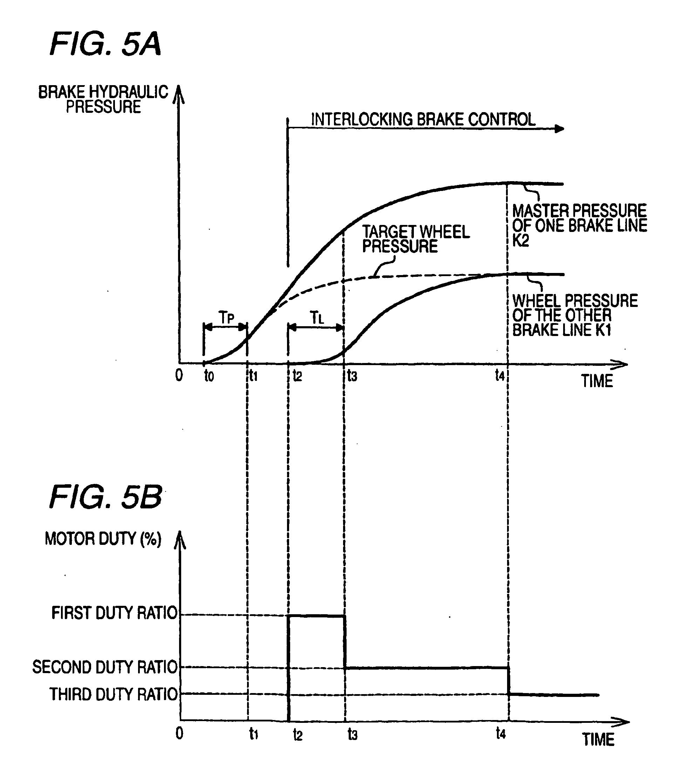

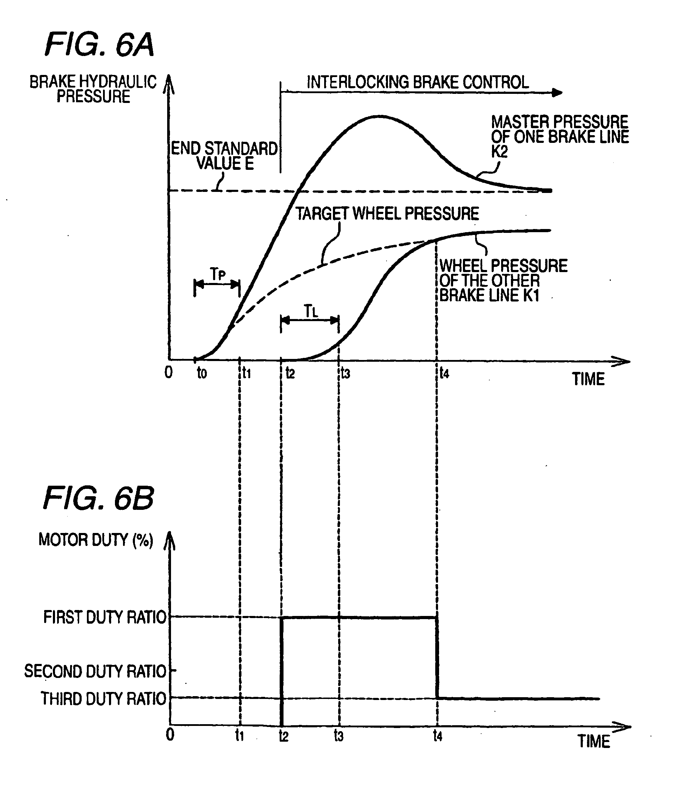

Examples of the methods for determining whether or not the operation is emergency are:
(1) it is determined emergency when the physical quantities (e.g., the master pressure and the wheel pressures of the brake line K2 or the stroke extent of the brake operation element L2) relating to the brake hydraulic pressure in the master cylinder M2 corresponding to the brake operation element L2 having started the operation earlier become a predetermined reference value or higher till the lapse of a determination reference time Tp (as referred to Fig. 5A and Fig. 6A) from an operation starting instant to, and it is not determined emergency when the aforementioned physical quantities failed to reach the reference value;
(2) it is determined emergency when the increases {e.g., the rising rate of the master pressure in the brake line K2 or the operating speed (the increase of the stroke extent per unit time) of the brake operation element L2} of the aforementioned physical quantities per unit time become a predetermined reference increase or higher till the lapse of the determination reference time T_{P} from the operation starting instant to, and it is not determined emergency when the aforementioned physical quantities failed to become the reference value; and
(3) it is determined emergency when the accelerations (e.g., the rising acceleration of the master pressure in the brake line K2 or the operating acceleration of the brake operation element L2) of the aforementioned physical quantities per unit time become a predetermined reference acceleration or higher till the lapse of the determination reference time T_{P} from the operation starting instant to, and it is not determined when the accelerations of the physical quantities failed to become the reference value.
However, the emergency determining operations should not be limited to the aforementioned ones. Here, the determination reference time T_{P} is set to a time period, which is required for eliminating the pressure loss when the motor 7 is activated at a later-described duty ratio.

Moreover, whether or not the emergency operation has ended may be determined on the basis of a predetermined end reference value E (as referred to Fig. 6A), for example. In this embodiment, it is determined that the emergency operation has ended, when the maximum of the physical quantities (e.g., the master pressure) relating to the brake hydraulic pressure of the master cylinder M2 does not exceed the predetermined end reference value or, when the physical quantities decrease and become lower than the end reference value after their maximum exceeded the end reference value.

The pressure loss restoration determination unit 21c has a function to determine whether or not the influences of the time lag from the output of the pulse signal to activate the motor 7 to the actual action of the motor 7 (the pump 6) or the pressure loss caused by the constitution of the master cylinder M1, the wheel brake B1, the output hydraulic pressure passage A, the wheel hydraulic pressure passage B and the suction passage C are eliminated. In short, the pressure loss restoration determining unit 21 c determines directly or indirectly whether or not the influences of the pressure loss is not observed in the time history waveform of the brake hydraulic pressure at the initial stage of the interlocking brake control.

Examples of methods for determining whether or not the influence of the pressure loss have been restored or not are:
(1) it is determined influence restoration, when a lapse time from T from an instant t₂, at which the interlocking brake control was started (at which the pulse signal to activate the motor 7 was outputted), becomes a restoration-scheduled time T_{L} or longer, and it is not determined the influence restoration when the lapse time T failed to reach the restoration-scheduled time T_{L} (see Fig. 5A and Fig. 6A);
(2) it is determined the influence restoration when the wheel pressure of the brake line K1 which is the target of the interlocking brake control becomes the restoration-scheduled pressure higher, and it is not determined the influence restoration when the wheel pressure fails to reach the restoration-scheduled pressure; and
(3) it is determined the influence restoration when the rising rate or the rising acceleration of the wheel pressure of the brake line K1 which is the target of the interlocking brake control becomes the scheduled rising speed or the scheduled rising acceleration which is expected when the motor 7 is activated at a first duty ratio, and it is not determined the influence restoration when the pressure rising rate or the pressure rising acceleration fails to reach the scheduled rising rate or the scheduled pressure rising acceleration.
However, the determining operations should not be limited to the aforementioned ones. In the following description, there is exemplified the case where the method (1) is adopted in determining whether or not the influences of the pressure loss have been restored.

The interlock history determining unit 21d has functions of:
determining whether or not the execution history of the interlocking brake control is exist; and
outputting the determination result to the interlocking brake control unit 22.
Here, for example, the interlock history determining unit 21 d determines that the execution history of the interlocking brake control is not exist, when the later-described interlock history flag is at "0", and that the execution history of the interlocking brake control is exist, when the interlock history flag is at "1".

The pressure determining unit 21e has functions of:
determining whether or not the master pressure is rising;
determining whether or not the wheel pressure or physical quantity correlating to the brake hydraulic pressure of the wheel brake B1 corresponding to the brake line K1 which is a target of the interlocking brake control is higher than the target wheel pressure which is the target value (that is, whether nor not the wheel pressure reaches the target wheel pressure); and
outputting the determination results to the interlocking brake control unit 22.
In this embodiment, it is determined that the master pressure has risen, when the value of the master pressure in the brake line K1 is higher than the previous value (that is, when the operation force of the brake operation element L1 is intensified).

The interlocking brake control unit 22 is constituted to include a target wheel pressure setting unit 22a, a duty ratio setting unit 22b and an interlock control unit 22c.

The target wheel pressure setting unit 22a has functions of: setting a target wheel pressure in the brake line K1 of the one wheel (the front wheel) on the basis of the master pressure (the wheel pressure) of the brake line K2 of the other wheel (the rear wheel); and executing a control to open/close the cut valve 1 so that the wheel pressure may be the target wheel pressure (the PWM control of the electromagnetic coil for driving the cut valve 1).
The target wheel pressure is so set on the basis of the magnitude or the rising rate of the master pressure (the wheel pressure) of the brake line K2 of the rear wheel. Here, the operations of the target wheel pressure by the target wheel pressure setting unit 22a are continuously executed even after a pump halt condition or a shift condition establishes.

The duty ratio setting unit 22b has a function to set a duty ratio at the time when the motor 7 is activated by the interlocking brake control. The duty ratio setting unit 22b according to this embodiment selects a first duty ratio (as referred to instants t₂ to t₃ of Figs. 5 and 6) for the time period from the instant when the interlocking brake control is started till it is determined by the pressure loss restoration determining unit 21c that the influences of the pressure loss are restored.
After it is determined by the pressure determining unit 21e that the wheel pressure of the brake line K1 which is the target of the interlocking brake control reached the target wheel pressure, the duty ratio setting unit 22b selects a third duty ratio smaller than the first duty ratio (as referred to an instant t₄ and later of Figs. 5 and 6).
After it was determined by the pressure loss restoration determining unit 21c that the influences of the pressure loss had been restored and before it is determined by the pressure determining unit 21e that the wheel pressure of the brake line K1 which is the target of the interlocking brake control reached the target wheel pressure (as referred to instants t₃ to t₄ of Figs. 5 and 6), different duty ratios are selected between the cases, in which the emergency operation determining unit 21 b determines that the operation of the brake operation element L2 is not emergency (the emergency operation flag is at "0") and emergency (the emergency operation flag is at "1").
Specifically, the duty ratio setting unit 22b selects a second duty ratio smaller than the first duty ratio but larger than the third duty ratio, when it is selected by the emergency operation determining unit 21 b that the operation of the brake operation element L2 is not emergency(as referred to instants t₃ to t₄ of Fig. 5), and
the duty ratio setting unit 22b selects the first duty ratio when it is selected by the emergency operation determining unit 21b that the operation of the brake operation element L2 is emergency (as referred to instants t₃ to t₄ of Fig. 6).

Here, the aforementioned individual duty ratios may be suitably set according to the performances or the like of the motor 7, however, it is desired that the first duty ratio be 100%.

The interlock control unit 22c is provided with a function to execute the predetermined interlocking brake control, when it is determined by the interlock determining unit 21 a that the interlocking condition (the rear interlocking condition or the front interlocking condition) establishes. The interlocking brake control by the interlock control unit 22c contains (as referred to Fig. 3) the control to close the cut valve 1, the control to open the suction valve 4, and the control to activate the motor 7 (i.e., the control to drive the pump 6). Moreover, when it is determined by the interlock determining unit 21a that the ending condition establishes, the interlock control unit 22c executes the control to open the cut valve 1 which is the target of the interlocking brake control, the control to close the suction valve 4 and the control to stop the motor 7 (the pump 6), thereby to end the interlocking brake control. Here, when the interlocking brake control is executed, the interlock control unit 22c sets the interlock history flag indicating the existence of the execution history of the interlocking brake control to "1", and stores the same in the not-shown storage unit.

When the rear interlocking brake control is executed, for example, the brake fluid, as reserved on the side of the master cylinder M1 (i.e., the brake fluid reserved in the master cylinder M1, the output hydraulic pressure passage A and the suction passage C), is fed by the pump 6 of the brake line K1 to the wheel hydraulic pressure passage B, so that the brake hydraulic pressure to act on the wheel brake B1 is raised. Here, the valve opening pressure of the cut valve 1 (i.e., the relief pressure of the regulator R) is set to the target wheel pressure by the target wheel pressure setting unit 22a.
When the brake hydraulic pressure of the wheel hydraulic pressure passage B exceeds the target wheel pressure, therefore, the brake fluid of the wheel hydraulic pressure passage B is reduced through the regulator R to the output hydraulic pressure passage A so that the brake hydraulic pressure of the wheel hydraulic pressure passage B is established at the target wheel pressure.
When the rear interlocking brake control is ended, the brake fluid of the wheel hydraulic pressure passage B returns through the cut valve 1 and the output hydraulic pressure passage A to the master cylinder M1 so that the brake hydraulic pressure to act on the wheel brake B 1 is quickly reduced.

With reference to Figs. 1 to 6, the operations of the brake hydraulic pressure control apparatus for the bar-handle vehicle thus constituted are described in detail. Here, the following description is made on the case of the rear interlocking brake control. When the front interlocking brake control is to be made, the various controls on the brake line K1 may be executed on the brake line K2.

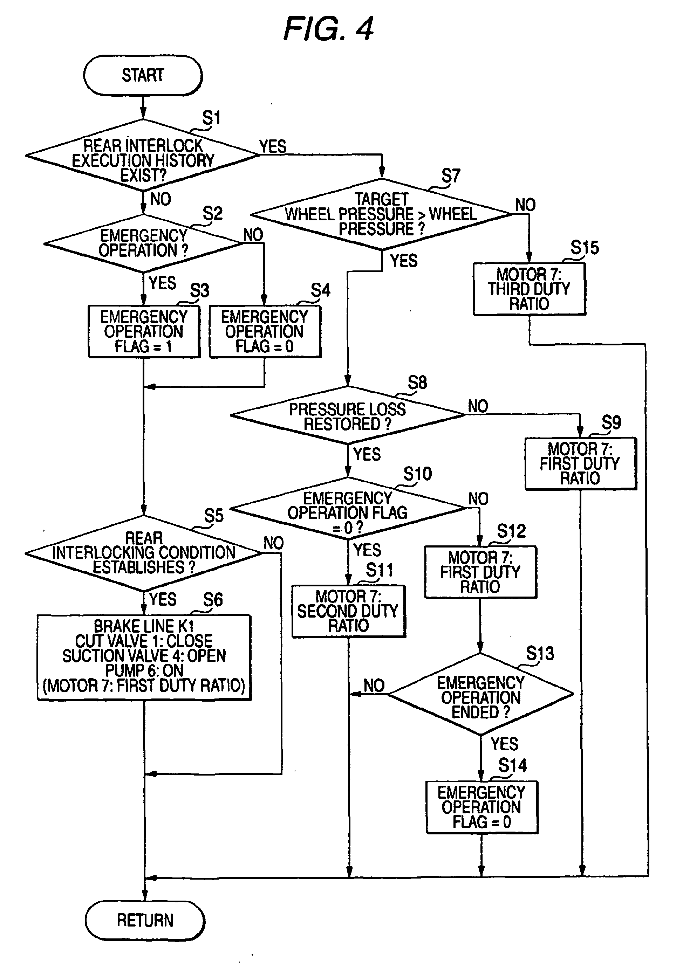

In the bar-handle vehicle brake hydraulic pressure control apparatus according to this embodiment, as shown in a control flow of Fig. 4, it is determined at first (at Step S1) by the interlock history determining unit 21d whether or not the execution history of the rear interlocking brake control is exist. In the initial state, the interlock history flag is at "0". It is, therefore, determined that the execution history of the rear interlocking brake control is not exist "No", and the routine advances to Step S2.

At Step 2, it is determined by the emergency operation determining unit 21b whether or not the operation of the brake operation element L2 of the rear wheel is emergency. When the emergency operation is determined "Yes" at Step S2, the emergency operation flag is set to (1) (at Step S3), and the routine advances to Step S5. When the emergency operation is not determined "No" at Step S2, on the other hand, the emergency operation flag is set to "0" (at Step S4), and the routine advances to Step S5.

At Step S5, it is determined by the interlock determining unit 21a whether or not the rear locking condition establishes. When it is determined "Yes" that the rear locking condition establishes, the routine advances to Step S6, at which the target wheel pressure is set by the target wheel pressure setting unit 22a, at which the first duty ratio is selected by the duty ratio setting unit 22b, and at which the rear interlocking brake controls (as referred to Fig. 3) including the control to close the cut valve 1 of the brake line K1, the control to open the suction valve 4 and the control to drive the pump 6 (that is, the controls to activate the motor 7 at the first duty ratio) are executed by the interlock control unit 22c. When the rear interlocking brake control is executed, the brake hydraulic pressure to act on the wheel brake B1 rises (as referred to the instant t₂ and after of Fig. 5A and Fig. 6A). When the rear interlocking brake control is executed, the interlock history flag is set to "1" by the interlock control unit 22c, and the routine advances to "RETURN".

When it is determined at Step S5 that the rear interlocking condition does not hold "No" (e.g., when the operations of the brake operation element L1 of the front wheel and the brake operation element L2 of the rear wheel are simultaneously started, and when the master pressure of the brake line K1 is higher than the halt reference value), the routine advances to "RETURN" without performing any interlocking brake control.

When Step S6 is executed, although the routine returns again to Step S1, since the interlock history flag is at "1", it is determined "Yes" that the rear interlock execution history is, and the routine advances to Step S7.

At Step S7, the pressure determining unit 21e determines whether or not the wheel pressure of the brake line K1 which is the target of the interlocking brake control has reached the target wheel pressure. When it is determined "Yes" that the wheel pressure of the brake line K1 has not reached the target wheel pressure, the routine advances to Step S8.

At Step S8, the pressure loss restoration determining unit 21c determines whether or not the influences of the pressure loss occurred at the initial stage of the interlocking brake control has been restored. In this embodiment, when the lapse time from the instant t₂, at which the interlocking brake control was started, is shorter than the preset restoration-scheduled time T_{L} (as referred to the instants t₂ to t₃ of Fig. 5A), it is determined "No" that the influences of the pressure loss are not restored, the routine advances to Step S9, at which the control is continued to activate the motor 7 at the first duty ratio by the interlock control unit 22c (as referred to the instants t₂ to t₃ of Fig. 5B).

When the lapse time from the instant t₂, at which the interlocking brake control was started, becomes longer than the preset restoration-scheduled time T_{L} (as referred the instant t₃ and after of Fig. 5A and Fig. 6A), it is determined "Yes" at Step S8 that the influences of the pressure loss was restored, and the routine advances to Step S10.

At Step S10, it is retrieved by the duty ratio setting unit 22b whether or not the emergency operation history, that is whether the emergency operation was performed, is exist. In short, it is determined by the duty ratio setting unit 22b whether or not the emergency operation flag is at "0". Here, when it is determined that the emergency operation flag is at "0" (the emergency operation is not performed), the duty ratio setting unit 22b selects the second duty ratio. When it is determined that the emergency operation flag is at "1" (the emergency operation is performed), the first duty ratio is selected by the duty ratio setting unit 22b.

When it is determined at Step S10 that the emergency operation flag is at "0" (the second duty ratio is selected by the duty ratio setting unit 22b), the routine advances to Step S 11, at which the control to activate the motor 7 at the second duty ratio is executed by the interlock control unit 22c (as referred to the instants t₃ to t₄ of Fig. 5B), and the routine advances to "RETURN".

On the other hand, when it is determined at Step S10 that the emergency operation flag is at "1" (the first duty ratio is selected by the duty ratio setting unit 22b), the routine advances to Step S12, at which the control to operate the motor 7 at the first duty ratio is continued (as referred to the instants t₃ to t₄ of Fig. 6B) by the interlock control unit 22c. When the emergency operation is determined, the motor 7 acts at the first duty ratio even after it is determined that the influences of the pressure loss were restored.

The routine advances to Step S 13 after Step S12, and the emergency operation determining unit 21b determines whether or not the emergency operation was ended. When it is determined "Yes" at Step S13 that the emergency operation was ended, the emergency operation flag is set to "0" (at Step S14) by the emergency operation deducing unit 21b, and the return advances to "RETURN". When it is determined "No" that the emergency operation was not ended, the routine advances to "RETURN" with the emergency operation flag being left at "1".

When it is determined "Yes" at Step S7 that the wheel pressure of the brake line K1 has not reached the target wheel pressure, the control to activate the motor 7 at the duty ratio at or before Step S7 is continuously executed. Specifically, the control to activate the motor 7 at the first duty ratio is continued (as referred to the instants t₃ to t₄ of Fig. 6), when the emergency operation is performed, and the control to activate the motor 7 at the second duty ratio is continued (as referred to the instants t3 to t4 of Fig. 5), when the emergency operation is not performed.

When it is determined "No" at Step S7 that the wheel pressure of the brake line K1 has reached the target wheel pressure, the third duty ratio is selected by the duty ratio setting unit 22b, and the routine advances to Step S 15, at which the control to activate the motor 7 at the third duty ratio is executed by the interlock control unit 22c (as referred to the instant t₄ and after of Figs. 5 and 6).

When the wheels may fall into the locked states while the aforementioned control flow is being executed, the control shifts to the aforementioned anti-lock brake control.

According to the brake hydraulic pressure control apparatus for the bar-handle vehicle of the first embodiment thus far described, when it is determined that the operation of the brake operation element L2 (the brake operation element L1) corresponding to the brake line K2 of the rear wheel (the brake line K1 of the front wheel) is not emergency, and that the pressure loss occurred at the initial stage of the interlocking brake control is restored, the duty ratio (the second duty ratio) of the motor 7 at and after the determination is made smaller than the duty ratio (the first duty ratio) till then. Across the point of time of the determination of the restoration of the influences of the pressure loss, therefore, the motion of the pump 6 is delayed so that the pulsations due to the actions of the pump 6 can be reduced.
In short, it is possible to reduce the pulsations of the pump 6, which are to be transmitted to the brake operation element L1 (L2) of the brake line K1 (K2) which the target of the interlocking brake control. Therefore, even if the brake operation element L1 (12) corresponding to the brake line K1 (K2) which the target of the interlocking brake control is operated while the interlocking brake control is being executed, the operation feeling of the brake operation element L1 (L2) is hardly deteriorated. During the interlocking brake control, moreover, the duty ratio of the motor 7 is reduced so that the working noises during the interlocking brake control can also be reduced.

From the starting instant t₂ to start the interlocking brake control till it is determined that the influences of the pressure loss were restored, the motor 7 is activated at the first duty ratio higher than the second duty ratio. As a result, the brake hydraulic pressure to be applied to the wheel brake B1 (B2) can be quickly raised by the pump 6.

According to the brake hydraulic pressure control apparatus for the bar-handle vehicle of this embodiment, moreover, when it is determined that the operation of the brake operation element L2 (the brake operation element L1) corresponding to the brake line K2 of the rear wheel (the brake line K1 of the front wheel) is emergency, even after it is determined that the influences of the pressure loss are restored, the motor 7 is activated at the first duty ratio. Therefore, when the driver performs the emergency operation upon the brake operation element L2 of the rear wheel (the brake operation element L1 of the front wheel), it is possible to raise quickly the brake hydraulic pressure to be applied to the other wheel brake B1 (the wheel brake B2).

According to the brake hydraulic pressure control apparatus for the bar-handle vehicle of this embodiment, moreover, when it is determined that the wheel pressure of the wheel brake B1 (the wheel brake B2) corresponding to the brake line K1 of the front wheel (the brake line K2 of the rear wheel), as subjected to the interlocking brake control, has reached the target wheel pressure, the motor 7 is activated at the third duty ratio smaller than the second duty ratio. This makes it possible to reduce the pulsations of the pump 6 or the working noises of the motor 7 after the wheel pressure reached the target wheel pressure, to that till the target wheel pressure is reached.

Here, the aforementioned constitution of the brake hydraulic pressure control apparatus for the bar-handle vehicle may also be suitably modified. In the aforementioned embodiment, for example, when it is determined that the operation of the brake operation element L2 is not emergency, the second duty ratio of one kind or a predetermined constant value is selected during the time period (as referred to the instants t₃ to t₄ of Fig. 5B) after it was determined that the influences of the pressure loss had been restored and before it is determined that the wheel pressure of the brake line K1 reaches the target wheel pressure.
However, the duty ratio setting unit 22b may also be constituted such that the second duty ratio of a different magnitude is selected according to the operating state of one brake operation element L2.
Here, the operating state of one brake operation element L2 can be judged from the magnitudes of:
the physical quantities (e.g., the master pressure and the wheel pressures of the brake line K2 or the stroke extent of the brake operation element L2) relating to the brake hydraulic pressure in the master cylinder M2 corresponding to the brake operation element L2;
the increases (e.g., the rising rate of the master pressure in the brake line K2 or the operating speed of the brake operation element L2) of the aforementioned physical quantities per unit time; and
the accelerations (e.g., the rising acceleration of the master pressure in the brake line K2 or the operating acceleration of the brake operation element L2) of the aforementioned physical quantities.

For example, moreover, the second duty ratio is made as the function of the aforementioned physical quantities, so that the duty ratio setting unit 22b may be constituted to set the second duty ratio on the basis of the magnitude of the physical quantities at the instant when a predetermined time period has elapsed from the operation starting time of the brake operation element L2. Alternatively, the second duty ratios of two or more kinds of different magnitudes are set in advance, so that the duty ratio setting unit 22b may also be constituted to select the second duty ratio of a suitable magnitude in accordance with the aforementioned physical quantities at the instant when a predetermined time period has elapsed from the operation starting time of the brake operation element L2, the increase of the physical properties per unit time period, or the acceleration of the physical properties.

If the magnitude of the second duty ratio is thus set according to the operating state of one brake operation element L2, the rising rate of the brake hydraulic pressure to be applied to the other wheel brake B1 can be adjusted to the operating state of one brake operation element L2. As a result, it is possible to reduce the pulsations of the pump 6 or the working noises of the motor 7 while keeping the rising rate of the brake hydraulic pressure according to the operating situations of the brake operation element L2.

In addition, the second duty ratio may be made a function of the difference value between the physical quantities (e.g., the master pressure) correlating to the brake hydraulic pressure in the brake line K1 which the target of the interlocking brake control and the target value (e.g., the target master pressure) in the interlocking brake control. The duty ratio setting unit 22b may be constituted to set the second duty ratio on the basis of the magnitude of the aforementioned difference value at the instant of the lapse of a predetermined time period from the starting instant of the interlocking brake control. Alternatively, two kinds or more of the second duty ratios of different magnitudes are set in advance. The duty ratio setting unit 22b may also be constituted to select the second duty ratio of a proper magnitude in accordance with the magnitude of the aforementioned difference value at the instant of the lapse of a predetermined time period from the starting instant of the interlocking brake control.

In this embodiment, the duty ratio after it was determined that the influences of the pressure loss had been restored is set in dependence upon whether or not the operations are emergency. However, another constitution may be made such that the duty ratio after it was determined that the influences of the pressure loss had been restored is always set to the second duty ratio, without determining whether or not the operations are emergency.

In the aforementioned embodiment, moreover, there has been exemplified the brake hydraulic pressure control apparatus for the bar-handle vehicle, which can perform the interlocking brake control on both the brake lines K1 and K2. However, the invention should not be limited thereto. The brake hydraulic pressure control apparatus for the bar-handle vehicle may also be one for performing the interlocking brake control on only the brake line K1 or K2, although not shown.

### (Second Embodiment)

The brake hydraulic pressure control apparatus for the bar-handle vehicle according to a second embodiment is provided with the same hydraulic unit 10 as that of the first embodiment, however, the constitution of the control unit 20 is different from that of the first embodiment. Here in this embodiment, the interlocking brake control includes the rear interlocking brake control and the front interlocking brake control, which are identical in the basic actions although the brake lines to be controlled are different. In the following description, therefore, specific examples are shown mainly on the rear interlocking brake control, while omitting the specific example on the front interlocking brake control.

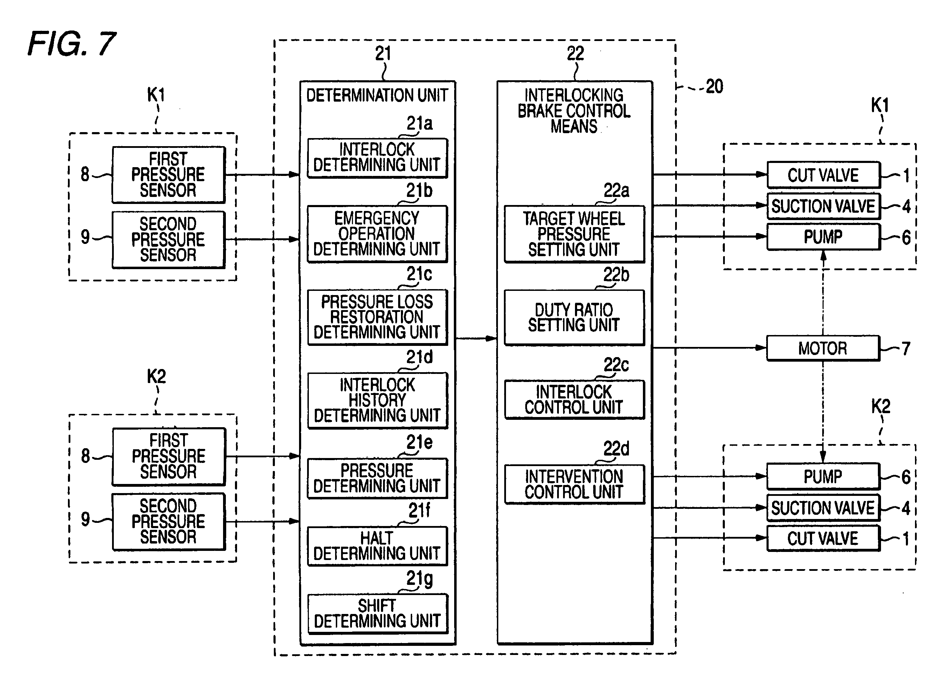

The control unit 20 in the second embodiment is equipped with the determination unit 21 and the interlocking brake control unit 22, as shown in Fig. 7.

The determination unit 21 is constituted to include the interlock determining unit 21a, the emergency operation determining unit 21b, the pressure loss restoration determining unit 21c, the interlock history determining unit 21 d and the pressure determining unit 21e of the same constitutions of those of the first embodiment and also it includes a halt determining unit 21f and a shift determining unit 21g.

The halt determining unit 21f includes functions of determining whether or not it is necessary to stop the motor 7 (the pump 6 of the brake line K1) activated by the interlocking brake control, and outputting the determination result to the interlocking brake control unit 22. In this embodiment, it is determined that the motor 7 (the pump 6) has to be stopped, when the condition that the master pressure of the brake line K1 or the physical quantity correlating to the brake hydraulic pressure of the master cylinder M1 is at or higher than the halt reference value stored in advance in the storage unit (as will be called the "pump halt condition").
In short, the halt determining unit 21f according to this embodiment determines it on the basis of the master pressure of the brake line K1 which is the target of the rear interlocking brake control whether or not the motor 7 (the pump 6) has to be stopped. Here, the halt reference value may be set to "zero" or a value capable of eliminating the measurement error or the like of the first pressure sensor 8. In this embodiment, the halt reference value is set to a value higher than the brake hydraulic pressure which is generated when the brake operation element L1 is lightly gripped.

The shift determining unit 21 g includes a function to determine whether or not it is necessary to close the suction valve 4 of the brake line K1, as opened by the interlocking brake control, and a function to output the determination result to the interlocking brake control unit 22. In this embodiment, it is determined that the suction valve 4 of the brake line K1 has to be closed, when there establishes the condition (as will be called the "shift condition") that the master pressure of the brake line K1 or the physical quantity correlating to the brake hydraulic pressure of the master cylinder M1 is at or higher than the wheel pressure of the brake line K1 or the physical quantity correlating to the brake hydraulic pressure applied to the wheel brake B1 by the rear interlocking brake control. In short, the shift determining unit 21 g according to this embodiment determines it on the basis of the master pressure and the wheel pressure of the brake line K1 which is the target of the rear interlocking brake control whether or not the suction valve 4 of the brake line K1 has to be closed.

The interlocking brake control unit 22 is constituted to include the target wheel pressure setting unit 22a, the duty ratio setting unit 22b and the interlock control unit 22c of the same constitutions as those of the first embodiment and also an intervention control unit 22d.

The intervention control unit 22d includes:
a function to execute a control to stop the motor 7 (the pump 6) activated by the interlocking brake control, when the halt determining unit 21f determines that the pump halt condition establishes;
a function to close the suction valve 4 opened by the interlocking brake control, when the shift determining unit 21 g determines that the shift condition establishes; and
a function to execute the control to open the cut valve 1 closed by the interlocking brake control, when the shift determining unit 21g determines that the shift condition establishes.

Here, when the pump halt condition establishes, the intervention control unit 22d executes the control to stop the motor 7. However, as for the cut valve 1 closed at the instant when the interlocking condition establishes, the execution of the control is kept the current state (i.e. the closed state). Similarly, as for the suction valve 4 opened when the interlocking condition establishes, the execution of the control is kept the current status (i.e. the open state). Accordingly, after the pump halt condition establishes, the feed of the brake fluid to the side of the wheel brake B1 is stopped, however, the brake hydraulic pressure applied to the wheel brake B1 by the rear interlocking brake control is established.
Moreover, the intervention control unit 22d executes the control to open the cut valve 1 and the control to close the suction valve 4, when the shift condition establishes. However, the intervention control unit 22d executes the control to keep the current state (i.e., the stopped state) upon the motor 7 (the pump 6) stopped when the pump halt condition established. Therefore, after the shift condition established like the normal set state (the state of Fig. 1), in which the anti-lock brake control or the interlocking brake control is not executed, the brake hydraulic pressure according to the stroke of the brake operation element L1 is directly applied to the wheel brake B1.

With reference to Figs. 7 to 10, the operations of the brake hydraulic pressure control apparatus for the bar-handle vehicle thus constituted are described in detail. Here, the following description is made on the case, in which the rear interlocking brake control made., however, if executing the front interlocking brake control, it can be performed by executing the following various controls on the brake line K2.

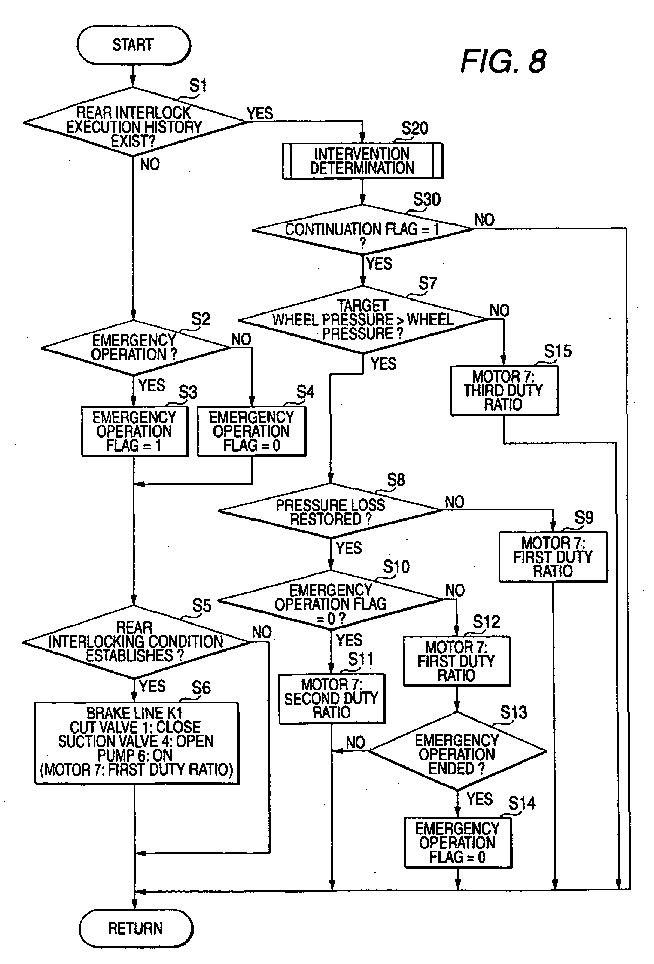

In the bar-handle vehicle brake hydraulic pressure control apparatus according to this embodiment, as shown in the control flow of Fig. 8, it is determined at first (at Step S1) by the interlock history determining unit 21 d whether or not the execution history of the rear interlocking brake control is. In the initial state, the interlock history flag is at "0". Therefore, it is determined that the execution history of the rear interlocking brake control is not "No", and the routine advances to Step S2.

Here, the operations at Step S2 to Step S6 are similar to those of the case of the aforementioned first embodiment, and their detailed descriptions are omitted.

When the rear interlocking brake control is started through the Step S6, the routine returns again to Step S1, at which the interlock history flag is at "1". Therefore, it is determined "Yes" that the rear interlock execution history is, and the routine advances to the "intervention determination" of Step S20.

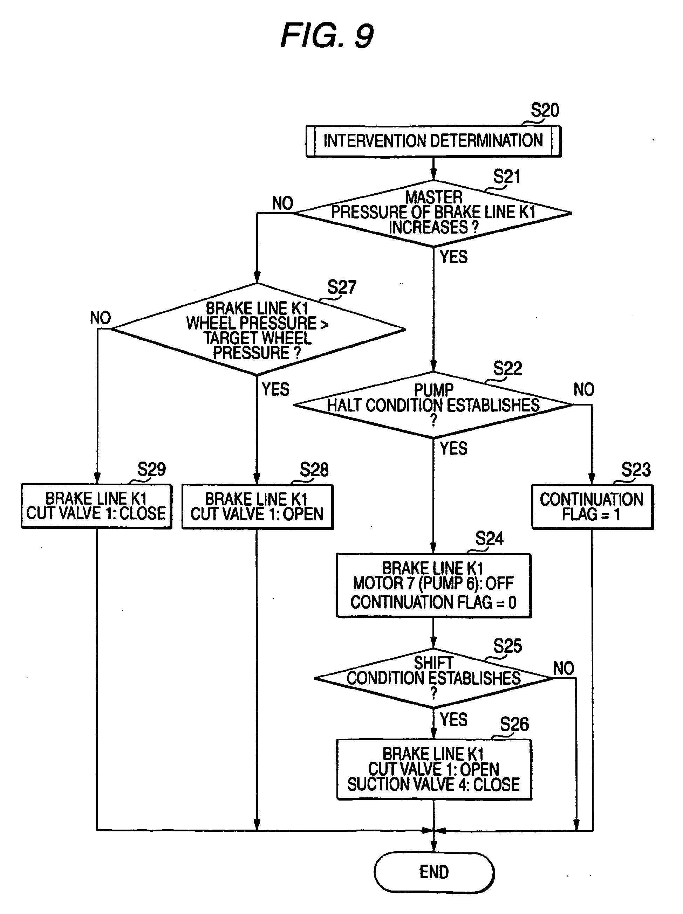

At Step S20, it is determined according to the control flow of Fig. 9, whether or not the rear interlocking brake control is to be continued.

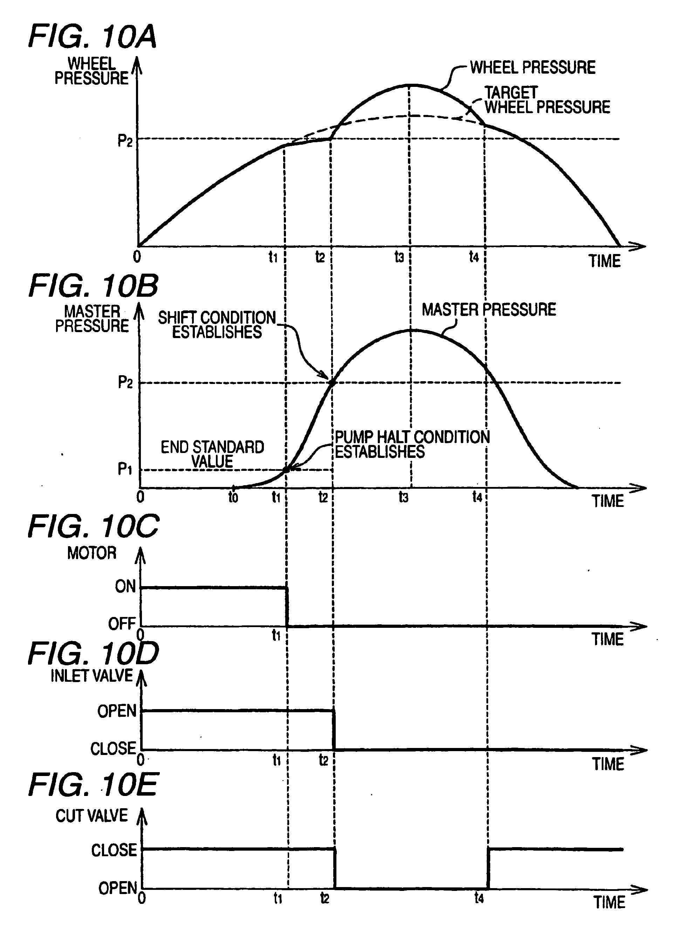

At Step S20, it is determined at first by the pressure determining unit 21e (at Step S21) whether or not the master pressure of the brake line K1 has increased. When it is determined "Yes" that the master pressure of the brake line K1 has increased, the routine advances to Step S22. When the brake operation element L1 is operated (as referred to Fig. 10B) after the rear interlocking brake control was started, the routine advances to Step S22 while the master pressure of the brake line K1 is increasing (for the period from to to t₃ in Fig. 10B).

At Step S22, it is determined by the halt determining unit 21f whether or not the pump halt condition has established. In this embodiment, it is determined "Yes" (as referred to Fig. 10B) that the pump halt condition has established, when the master pressure of the brake line K1 which is the target of the rear interlocking brake control is at or higher than the halt reference value P₁. Specifically, it is determined "Yes" that the pump halt condition has established, when the operation of the brake operation element L1 is started after the rear interlocking brake control was started and when the master pressure is increased to the halt reference value P₁ or higher by the operation of that brake operation element L1.

Here, when the master pressure is lower than the halt reference value P1 (although including the case, in which the brake operation element L1 is not operated), it is determined "No" that the pump halt condition does not established. When it is determined "No" that the pump halt condition does not established, it is determined that the rear interlocking brake control is continued. The continuation flag is set at "1" (at Step S23). The intervention determination is ended, and the routine advances to Step S30, as shown in Fig. 8.

When it is determined "Yes" at Step S22 that the pump halt condition establishes, on the other hand, the routine advances to Step S24, at which the control to stop the motor 7 (i.e., the control to stop the pump 6) activated by the rear interlocking brake control is executed (as referred to the instant t₁ and after of Fig. 10C) by the intervention control unit 22d, and at which the continuation flag is set to "0" indicating that the interlocking brake control is not continued. Here, the controls at or before Step S24 are executed on the cut valve 1 and the suction valve 4, and the operations of the target wheel pressure by the target wheel pressure setting unit 22a are continuously executed.

When the control to stop the motor 7 (i.e., the control to stop the pump 6) is executed, the feed of the brake fluid to the side of the wheel brake B1 is stopped. However, the control to close the cut valve 1 is continuously executed (as referred to the instants t₁ to t₂ of Fig. 10D), the brake hydraulic pressure applied to the wheel brake B1 is held (as referred to the instants t₁ to t₂ of Fig. 10A). Here, the one-way valve is housed in the pump 6, as described hereinbefore, the brake fluid on the discharge side does not flow back to the entrance side even if the suction valve 4 is left open.

When the operation of Step S24 is executed, the routine advances to Step S25, at which it is determined by the shift determining unit 21 g whether or not the shift condition has established. In this embodiment, it is determined "Yes" that the shift condition has established, when the master pressure of the brake line K1 which is the target of the rear interlocking brake control becomes the wheel pressure P₂ of the brake line K1 or higher, however, it is determined "No" that the shift condition does not established, when the master pressure is lower than the wheel pressure P₂.

When it is determined "Yes" that the shift condition has established, the routine advances to Step S26, at which the control to open the cut valve 1 closed by the rear interlocking brake control and to close the suction valve 4 opened by the rear interlocking brake control are executed (as referred to the instant t₂ and after of Figs. 10D and 10E) by the intervention control unit 22d while the motor 7 (the pump) being stopped.

When the cut valve 1 is opened at Step S26, the brake hydraulic pressure according to the stroke extent of the brake operation element L1 is applied to the wheel brake B1, as shown by the instants t₂ to t₄ of Fig. 10A.

Here in this embodiment, the regulator R is equipped with the check valve 1a for allowing the inflow of the brake fluid from the upstream side (i.e., the side of the master cylinder M1) to the downstream side (i.e., the side of the wheel brake B1). Even if the control to open the cut valve 1 is not executed when the shift condition establishes, the check valve 1a is opened to feed the brake hydraulic pressure according to the stroke extent of the brake operation element L1 to the wheel brake B1, at the instant when the brake hydraulic pressure of the master cylinder M1 in the brake line K1 which is the target of the rear interlocking brake control is higher by the opening pressure of the check valve 1a than the brake hydraulic pressure fed by the rear interlocking brake control to the wheel brake B1.
If the cut valve 1 is opened (as referred to the instants t₂ to t₄ of Fig. 10E) at the instant when the shift condition establishes, as in this embodiment, the brake fluid can be fed more smoothly to the downstream side (as referred to the instants t₂ to t₄ of Fig. 10A). Even if the control to close the suction valve 4 is not executed when the shift condition establishes, on the other hand, it is not unlike that the brake hydraulic pressure according to the stroke extent of the brake operation element L1 is applied to the wheel brake B1, when the brake hydraulic pressure of the master cylinder M1 becomes higher than the brake hydraulic pressure of the rear wheel brake B1.
If the control to close the suction valve 4 is executed as in this embodiment (as referred to the instant t₂ and after of Fig. 10D), the brake fluid flows to the downstream side through only the regulator R. As compared with the case, in which the suction valve 4 is not closed (the brake fluid is allowed to flow to the downstream side via the suction passage C (the pump 6)), therefore, the degree of reducing the operation reaction of the brake operation element L1 can be reduced to keep the operation feeling satisfactory.

Here, when it is determined "No" at Step S25 that the shift condition does not established, the routine advances to "END".

When the operating force of the brake operation element L1 having started its operation after the rear interlocking brake control was started is held or weakened (as referred to the instants t₃ to t₄ of Fig. 10B), it is determined "No", as described hereinbefore, at Step S21 that the master pressure of the brake line K1 has not increased, and the routine advances to Step S27. When the routine advances to Step S27, the pressure determining unit 21e determines whether or not the wheel pressure has reached the target wheel pressure.

When it is determined "Yes" at Step S27 that the wheel pressure of the brake line K1 is at or higher than the target wheel pressure (as referred to the instants t₃ to t₄ of Fig. 10A), the routine advances to Step S28, at which the control to open the cut valve 1 of the brake line K1 is opened by the intervention control unit 22d. When the cut valve 1 is opened, the brake hydraulic pressure to act on the wheel brake B1 is decreased as the stroke extent of the brake operation element L1 decreases.

When it is determined "No" at Step S27 that the wheel pressure is lower than or equal to the target wheel pressure (as referred to the instant t₄ or after of Fig. 10A), the routine advances to Step S29, at which the control to close the cut valve 1 of the brake line K1 is executed by the intervention control unit 22d. Even if the control to close the cut valve 1 is executed, the valve opening pressure of the cut valve 1 is set to the target wheel pressure by the target wheel pressure setting unit 22a, so that the wheel pressure is reduced to follow the target wheel pressure.
Note that at Step S29, the controls at and before Step S29 are continuously executed on the suction valve 4 and the motor 7 (the pump 6). Therefore,
(1) when the routine advances to Step S29 before the pump halt condition establishes, the rear interlocking brake control is continued (to set the continuation flag at " 1");
(2) when the routine advances to Step S29 after the pump halt condition established and before the shift condition establishes, the control to open the suction valve 4 and the control to stop the motor 7 (the pump 6) is continued; and
(3) when the routine advances to Step S29 after the shift condition established, the control to close the suction valve 4 and the control to stop the motor 7 (the pump 6) are continued.

When the operation of the brake operation element L2 of the rear wheel is continuously performed, the control to close the suction valve 4 and the control to drive the pump 6 may be executed to reopen the rear interlocking brake control, at the instant when the master pressure of the brake line K1 becomes lower than the halt reference value P₁.

When the control flow shown in Fig. 9 is ended, the routine advances to Step S30, as shown in Fig. 8, at which it is determined whether or not the continuation flag is at "1". When it is determined "No" that the continuation flag is "0", the routine advances to "RETURN" directly.

When it is determined "Yes" that the continuation flag is "1", on the other hand, the rear interlocking brake control is continued, and the routine advances to Step S7. Here, the actions at Steps S7 to S 15 are similar to those of the aforementioned first embodiment, and their detailed descriptions are omitted.

According to the brake hydraulic pressure control apparatus for the bar-handle vehicle according to the second embodiment thus far described, the motor 7 is stopped when the master pressure of the master cylinder M1 (the master cylinder M2) corresponding to the brake line K1 (the brake line K2) which is the target of the interlocking brake control becomes the halt reference value or higher. After the master pressure reached the halt reference value, the pulsations, as might otherwise be caused by the motions of the pump, are not generated. According to the brake hydraulic pressure control apparatus for the bar-handle vehicle of the present embodiment, the operation feeling of the brake operation element L1 (L2) is not deteriorated, even if the driver operates the brake operation element L1 (L2) which is the target of the interlocking brake control while the interlocking brake control is being executed.

According to the brake hydraulic pressure control apparatus for the bar-handle vehicle of the present embodiment, moreover, the braking force can be enhanced by the interlocking brake control until the master pressure reaches the halt reference value. As a result, the interlocking brake control can be controlled if the driver just touches the brake operation element L1 (L2) corresponding to the brake line K1 (K2) which is the target of the interlocking brake control.

According to the brake hydraulic pressure control apparatus for the bar-handle vehicle of the present embodiment, when the brake hydraulic pressure of the master cylinder M1 (M2) in the brake line K1 (K2) which is the target of the interlocking brake control is made higher than the brake hydraulic pressure applied to the wheel brake B1 (B2) by the interlocking brake control, the brake hydraulic pressure corresponding to the stroke extent of the brake operation element L1 (L2) corresponding to the brake line K1 (K2) is applied to the wheel brake B1 (B2). As a result, it is possible to give the driver a feeling to operate the wheel brake B1 (B2) directly.

Here, the aforementioned constitution of the brake hydraulic pressure control apparatus for the bar-handle vehicle may also be suitably modified.
In the aforementioned embodiment, for example, when the pump halt condition establishes, the control to stop the motor 7 is made, but the suction valve 4 is kept open. It is arbitrary to execute the control to stop the motor 7 and also to close the suction valve 4.

In the aforementioned embodiment, moreover, the shift condition is made such that the master pressure of the brake line K1 is equal to or higher than the wheel pressure of the brake line K1. However, the shift condition should not be limited thereto, it may be exemplified by that, in which the master pressure of the brake line K1 is at or higher than the shift reference value larger than the halt reference value. Here, the predetermined constant value in the not-shown storage unit may be used as the shift reference value, and also, the target wheel pressure set by the target wheel pressure setting unit 22a may be the shift reference value.

In the aforementioned embodiment, moreover, there is exemplified a case, in which the intervention control is performed according to the control flow shown in Fig. 9, but may be suitably modified. The control flow may also be modified such that the control mode is selected on the basis of the aforementioned various conditions (e.g., the interlocking condition, the pump halt condition or the shift condition) so that the intervention control is executed to correspond to the control mode selected.

In this case, the condition that "the master pressure of the brake line K1 is at or higher than the target wheel pressure set by the target wheel pressure setting unit 22a" is made as the shift condition. At the same time, although illustrations are omitted, the determination unit 21 may be constituted such that:
the interlocking mode is selected when only the interlocking condition is established among the interlocking condition, the pump halt condition and the shift condition establishes;
the pump stopping mode is selected when only the interlocking condition and the pump halt condition are established; and
the shifting mode is selected when the interlocking condition, the pump halt condition and the shift condition are established.
At the same time, the interlocking brake control unit 22 may also be constituted such that:
"the interlocking brake control including the control to close the cut valve 1, the control to open the suction valve 4 and the control to activate the motor 7 (the pump 6)" is executed when the interlocking mode is selected by the determination unit 21;
"the control to close the cut valve 1, the control to close the suction valve 4 and the control to stop the motor 7 (the pump 6)" are executed when the pump stopping mode is selected; and
"the control to open the cut valve 1, the control to close the suction valve 4 and the control to stop the motor 7 (the pump 6)" are executed when the shifting mode is selected.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the scope of the present invention, as laid down in the appended claims.

## Claims

1. A brake hydraulic pressure control apparatus for a bar-handle vehicle, comprising:
two brake lines (Kl; K2) including hydraulic pressure passages (A; B) leading from master cylinders (M1; M2) to wheel brakes (B1; B2) for generating brake hydraulic pressures according to stroke extents of brake operation elements (L1; L2);
a determination unit (21) which determines whether or not it is necessary to apply the brake hydraulic pressure to the wheel brake (B1) corresponding to the other of the brake lines (K1) in response to an operation of the brake operation element (L2) corresponding to one of the brake lines (K2);
a pump (6) provided on at least the other of the brake lines;
a motor (7) which drives the pump (6); and
an interlocking brake control unit (22) which executes an interlocking brake control including a control to activate the motor (7), when the determination unit (21) determines that it is necessary to apply the brake hydraulic pressure to the other of the wheel brakes (B1),
wherein the brake fluid discharged from the pump (6) is supplied to the other of the wheel brakes (B1) to apply the brake hydraulic pressure on the other of the wheel brakes (B1),
wherein the interlocking brake control unit (22) is adapted to activate the motor (7) at a second duty ratio
the brake hydraulic pressure control apparatus is **characterized in that**:
when the interlocking brake control is started, the interlocking brake control unit (22) is adapted to activate the motor (7) at a first duty ratio;
the determination unit (21) also determines whether or not influences of pressure loss, occurred at an initial stage of the interlocking brake control, have been restored; and
wherein, when the determination unit (21) determines that the influences of the pressure loss have been restored, the second duty ratio smaller than the first duty ratio is activated;
wherein the determination unit (21) is further adapted to determine whether or not the operation of the brake operation element (L2) corresponding to one of the brake lines (K2) is in a emergency operation and
when the determination unit (21) determines that the operation is an emergency operation, the interlocking brake control unit (22) is adapted to activate the motor (7) at the first duty ratio even after the determination unit (21) determines that the influences of the pressure loss have been restored.

2. The brake hydraulic pressure control apparatus for the bar-handle vehicle, as set forth in claim 1, wherein
the interlocking brake control unit (22) sets magnitude of the second duty ratio in accordance with an operation state of the brake operation element (L2) corresponding to one of the brake lines (K2).

3. The brake hydraulic pressure control apparatus for the bar-handle vehicle, as set forth in claim 1 or 2, wherein
the determination unit (21) determines whether or not the physical quantity correlating to the brake hydraulic pressure of the wheel brake (B1) corresponding to the other of the brake lines (K1) which is a target of the interlocking brake control has reached a target value and
the interlocking brake control unit (22) activates the motor (7) at a third duty ratio, which is smaller than the second duty ratio, when the determination unit (21) determines that the physical quantity has reached the target value.

4. The brake hydraulic pressure control apparatus for the bar-handle vehicle, as set forth in claim 1 through 3, wherein
the determination unit (21) determines that the pump halt condition has established, when the physical quantity correlating to the brake hydraulic pressure of the master cylinder (ML) corresponding to the other of the brake lines (K1) which is a target of the interlocking brake control becomes a halt reference value or higher and
the interlocking brake control unit (22) executes a control to halt the motor (7) having been activated by the interlocking brake control, when the determination unit (21) determines that the pump halt condition has established.

## Patentansprüche

1. Bremshydraulikdrucksteuervorrichtung für ein Lenkerfahrzeug mit:
zwei Bremsleitungen (K1; K2) mit Hydraulikdruckkanälen (A; B), die von Hauptzylindern (M1; M2) zu Radbremsen (B1; B2) zum Erzeugen von Bremshydraulikdrücken gemäß Hubausdehnungen von Bremsbetätigungselementen (L1; L2) führen;
einer Bestimmungseinheit (21), die bestimmt, ob es notwendig ist, den Bremshydraulikdruck an der zu der anderen der Bremsleitungen (K1) korrespondierenden Radbremse (B1) anzulegen oder nicht, als Antwort auf eine Betätigung des Bremsbetätigungselements (L2), das zu einer der Bremsleitungen (K2) korrespondiert;
einer Pumpe (6), die an mindestens der anderen der Bremsleitungen vorgesehen ist;
einem Motor (7), der die Pumpe (6) antreibt; und
einer Verriegelungsbremssteuereinheit (22), die eine Verriegelungsbremssteuerung inklusive einer Steuerung zum Aktivieren des Motors (7) ausführt, wenn die Bestimmungseinheit (21) bestimmt, dass es notwendig ist, den Bremshydraulikdruck an die andere der Radbremsen (B1) anzulegen,
wobei die von der Pumpe (6) abgegebene Bremsflüssigkeit der anderen der Radbremsen (B1) zugeführt wird, um den Bremshydraulikdruck an der anderen der Radbremsen (B1) anzulegen,
wobei die Verriegelungsbremssteuereinheit (22) zum Aktivieren des Motors (7) mit einer zweiten Einschaltdauer ausgebildet ist,
wobei die Bremshydraulikdrucksteuervorrichtung **dadurch gekennzeichnet ist, dass**:
wenn die Verriegelungsbremssteuerung gestartet wird, die Verriegelungsbremssteuereinheit (23) zum Aktivieren des Motors (7) mit einem ersten Tastgrad ausgebildet ist;
die Bestimmungseinheit (21) auch bestimmt, ob Einflüsse von Druckverlust, die in einem Anfangsstadium der Verriegelungsbremssteuerung auftreten, wiederhergestellt worden sind oder nicht; und
wobei, wenn die Bestimmungseinheit (21) bestimmt, dass die Einflüsse des Druckverlusts wiederhergestellt worden sind,
der zweite Tastgrad, der kürzer ist als der erste Tastgrad, aktiviert wird;
wobei die Bestimmungseinheit (21) ferner zum Bestimmen, ob die Betätigung des Bremsbetätigungselements (L2), das zu einer der Bremsleitungen (K2) korrespondiert, in einer Notfallbetätigung ist oder nicht, und
wenn die Bestimmungseinheit (21) bestimmt, dass die Betätigung eine Notfallbetätigung ist, die Verriegelungsbremssteuereinheit (23), selbst nachdem die Bestimmungseinheit (21) bestimmt, dass die Einflüsse des Druckverlust wiederhergestellt worden sind, zum Aktivieren des Motors (7) mit dem ersten Tastgrad ausgebildet ist.

2. Bremshydraulikdrucksteuervorrichtung für das Lenkerfahrzeug nach Anspruch 1, wobei die Verriegelungsbremssteuereinheit (23) einen Betrag des zweiten Tastgrads gemäß einem Betätigungszustand des Bremsbetätigungselements (L2), das zu einem der Bremsleitungen (K2) korrespondiert, festlegt.

3. Bremshydraulikdrucksteuervorrichtung für das Lenkerfahrzeug nach Anspruch 1 oder 2, wobei
die Bestimmungseinheit (21) bestimmt, ob die physikalische Größe, die mit dem Bremshydraulikdruck der mit der anderen der Fahrzeugbremsleitungen (K1) korrespondierenden Radbremse (B1) korreliert, die ein Ziel der Verriegelungsbremssteuerung ist, einen Zielwert erreicht hat, und
die Verriegelungsbremssteuereinheit (22) den Motor (7) mit einem dritten Tastgrad aktiviert, der kleiner ist als der zweite Tastgrad, wenn die Bestimmungseinheit (21) bestimmt, dass die physikalische Größe den Zielwert erreicht hat.

4. Bremshydraulikdrucksteuervorrichtung für das Lenkerfahrzeug nach einem der Ansprüche 1-3, wobei
die Bestimmungseinheit (21) bestimmt, dass die Pumpenstoppbedingung etabliert ist, wenn die physikalische Größe, die mit dem Bremshydraulikdruck des zu der anderen der Bremsleitungen (K1) korrespondierenden Hauptzylinders (M1) korreliert, die ein Ziel der Verriegelungsbremssteuerung ist, ein Stoppreferenzwert oder größer wird, und
die durch die Verriegelungsbremssteuerung aktivierte Verriegelungsbremssteuereinheit (22) eine Steuerung zum Stoppen des Motors (7) ausführt, wenn die Bestimmungseinheit (21) bestimmt, dass die Pumpenstoppbedingung festgestellt ist.

## Revendications

1. Appareil de commande de pression hydraulique de frein pour un véhicule à guidon, comprenant :
deux conduites de frein (K1 ; K2) incluant des passages de pression hydraulique (A ; B) allant de maîtres-cylindres (M1 ; M2) à des freins de roue (B1 ; B2) pour produire des pressions hydrauliques de frein selon des étendues de course d'éléments de mise en oeuvre de frein (L1 ; L2) ;
une unité de détermination (21) qui détermine si vraiment il est nécessaire d'appliquer la pression hydraulique de frein au frein de roue (B1) correspondant à l'autre des conduites de frein (K1) en réponse à une mise en oeuvre de l'élément de mise en oeuvre de frein (L2) correspondant à une des conduites de frein particulière (K2) ;
une pompe (6) disposée sur au moins l'autre des conduites de frein ;
un moteur (7) qui entraîne la pompe (6) ; et
une unité de commande de frein à verrouillage (22) qui exécute une commande de frein à verrouillage incluant une commande pour activer le moteur (7), quand l'unité de détermination (21) détermine qu'il est nécessaire d'appliquer la pression hydraulique de frein à l'autre des freins de roue (B1),
dans lequel le liquide de freins déchargé en provenance de la pompe (6) est fourni à l'autre des freins de roue (B1) pour appliquer la pression hydraulique de frein sur l'autre des freins de roue (B1),
dans lequel l'unité de commande de frein à verrouillage (22) est conçue pour activer le moteur (7) à un second facteur de marche
l'appareil de commande de pression hydraulique de frein est **caractérisé en ce que** :
lorsque la commande de frein à verrouillage est démarrée, l'unité de commande de frein à verrouillage (22) est conçue pour activer le moteur (7) à un premier facteur de marche ;
l'unité de détermination (21) détermine également si vraiment des influences de perte de pression, survenues à une étape initiale de la commande de frein à verrouillage, ont été rétablies ; et
dans lequel, quand l'unité de détermination (21) détermine que les influences de la perte de pression ont été rétablies, le second facteur de marche plus petit que le premier facteur de marche est activé ;
dans lequel l'unité de détermination (21) est en outre conçue pour déterminer si vraiment la mise en oeuvre de l'élément de mise en oeuvre de frein (L2) correspondant à une des conduites de frein (K2) est dans un fonctionnement en cas d'urgence, et
quand l'unité de détermination (21) détermine que la mise en oeuvre est un fonctionnement en cas d'urgence, l'unité de commande de frein à verrouillage (22) est conçue pour activer le moteur (7) au premier facteur de marche même après que l'unité de détermination (21) détermine que les influences de la perte de pression ont été rétablies.

2. Appareil de commande de pression hydraulique de frein pour le véhicule à guidon, selon la revendication 1, dans lequel
l'unité de commande de frein à verrouillage (22) fixe l'amplitude du second facteur de marche selon un état de mise en oeuvre de l'élément de mise en oeuvre de frein (L2) correspondant à une des conduites de frein (K2).

3. Appareil de commande de pression hydraulique de frein pour le véhicule à guidon, selon la revendication 1 ou 2, dans lequel
l'unité de détermination (21) détermine si vraiment la corrélation de quantité physique à la pression hydraulique de frein du frein de roue (B1) correspondant à l'autre des conduites de frein (K1) qui est une cible de la commande de frein à verrouillage a atteint une valeur cible, et
l'unité de commande de frein à verrouillage (22) active le moteur (7) à un troisième facteur de marche, qui est plus petit que le second facteur de marche, quand l'unité de détermination (21) détermine que la quantité physique a atteint la valeur cible.

4. Appareil de commande de pression hydraulique de frein pour le véhicule à guidon, selon la revendication 1 à 3, dans lequel
l'unité de détermination (21) détermine que l'état d'interruption de pompe a été établi, quand la corrélation de la quantité physique à la pression hydraulique de frein du maître-cylindre (M1) correspondant à l'autre des conduites de frein (K1) qui est une cible de la commande de frein à verrouillage devient une valeur de référence d'interruption ou plus élevée, et
l'unité de commande de frein à verrouillage (22) exécute une commande pour interrompre le moteur (7) ayant été activé par la commande de frein à verrouillage, quand l'unité de détermination (21) détermine que l'état d'interruption de pompe a été établi.
